# EUROPEAN PATENT APPLICATION

(11) **EP 4 708 034 A1**
(43) Date of publication of application: **11.03.2026**
(21) Application number: 25200137.5
(22) Date of filing: 04.09.2025
(51) Int. Cl.: G06F 8/71, G06F 11/34, G06N 3/092, G06F 11/07

(54) **SYSTEM FOR AND METHOD OF PREVENTING PERFORMANCE ISSUES IN A CODE COLLABORATION DATA REPOSITORY USING REINFORCEMENT LEARNING**

(30) Priority: 10.09.2024 US 202463693044 P; 18.08.2025 US 202519303030
(71) Applicant: GerritForge Inc., Sunnyvale California 9408 (US)
(72) Inventor: MILANESIO, Luca Domenico, Sunnyvale, 94086 (US); BARONE, Antonio, Sunnyvale, 94086 (US); PONCIROLI, Fabio, Sunnyvale, 94086 (US)
(74) Representative: Marks & Clerk LLP

(57) **Abstract**

A system for and method of managing a code collaboration data repository. Metrics that represent a current state of a code collaboration data repository are collected. Performance resulting from selection of each of a plurality of specified actions that affect structure of the data repository is predicted. The specified actions can include: no action; generating a bitmap of the data repository; repacking some or all of file references of the data repository; and removing .keep references. An action is selected from among the one or more specified actions based on the predicted performance. The selected action is applied to the data repository thereby changing the structure of the data repository. This process may be performed repeatedly thereby improving performance of accesses to the data repository.

## Description

This application claims priority of U.S. Provisional Application No. 63/693,044, filed September 10, 2024.

### Background of the Invention

The present invention relates to the field of code collaboration tools. More particularly, the present invention relates to improvements to managing a data repository used for code collaboration.

Git is a version control system invented by Linus Torvalds in 2005 and has been widely adopted worldwide since then. While its use in open-source projects like the Linux Kernel did not encounter any substantial hurdle because of its peer-to-peer use, its use in broader enterprise organizations - where the repository is kept in a central location and has a greater number of concurrent users accessing it - have highlighted the need for continuous maintenance to keep its performance stable and reliable. When the size and workload of Git repositories grow because of centralized peer reviews and continuous delivery, the production systems hosting the Git servers become overwhelmed, unstable, and prone to global outages.

The problem of keeping a stable performance with Git is well-known in the wider software community. The Git tool itself has a number of tools that can help maintain an efficient organization even when the size of the repository grows.

### Git Garbage Collection (GC)

From its early days, Git had a mechanism called "Garbage Collection" that would remove redundant objects and compact files into larger ones. Git does not rely on a relational database but uses solely a filesystem on a physical or virtualised local or shared disk. All the filesystems suffer from performance degradation when overloaded by a growing number of small files due to the growth of their internal structures for listing and locating the directories and files list. The Git Garbage Collection is a process introduced in Git that allows one to navigate the entire repository structure, identifying all the reachable objects and storing them in a compressed format called packfile with a high-performance index for quick lookups.

### Git bitmap

Shawn Pearce presented a system called "Git bitmap" in 2013. It allows users to quickly navigate repositories with a growing number of objects using a reachability sparse compressed bitmap or matrix. The use of a reachability matrix for representing a directed acyclic graph (DAG) is well-known in the literature. However, nobody had ever considered using it with a large Git repository because of the explosion of the matrix size when representing millions of nodes, as in a large Git repository. Shawn Pierce demonstrated how it can be implemented in a compressed format and showed performance improvements over traditional navigation.

### Git reftable

Shawn Pearce introduced the git reftable data structure in 2017, which allows faster ref lookup times despite the growth in the number of refs.

### Git multi-pack index and geometric repacking

GitHub noticed an issue when its adoption grew over time, and the number of outages and slowdowns due to overload also impacted system stability. In 2022, GitHub presented a mechanism for consolidating multiple packfiles into a small number of larger ones, keeping a global index for faster access.

### Summary of the Invention

The present invention provides a system for and method of managing a code collaboration data repository. In an embodiment, metrics that represent the current state of a code collaboration data repository are collected. Performance resulting from the selection of each of a plurality of specified actions that affect the structure of the data repository is predicted. The specified actions can include any or all of the following: no action; generating a bitmap of the data repository; repacking some or all of file references of the data repository; removing .keep references; repacking some or all of the loose objects in the repository; regenerating a multi-pack index file and its associated multi-pack bitmap; and removing logically the redundant packfiles by moving them into the Git repository "/preserved" subdirectory. An action is selected from among one or more specified actions based on the predicted performance. The selected action is applied to the data repository thereby changing the structure of the data repository. This process may be performed repeatedly, thereby improving the performance of accesses to the data repository.

In an embodiment, a model of the code collaboration data repository is generated. Simulated data access requests are applied to the model of the code collaboration data repository. Preferably, this includes subjecting the model to a high level of data access requests in order to shorten the time needed to refine the model. Metrics that represent a plurality of states of the model are collected. Change in performance of the model resulting from applying each of the specified actions to each of the plurality of states of the model is determined.

In a further embodiment, a look-up table that associates each state of the model with each of the specified actions is updated based on observation of the model. The look-up table correlates each combination of state of the model and specified action with an expected change in performance of the model.

In an embodiment, selecting from among the specified actions includes assigning a cost or penalty to each of the specified actions and a benefit or reward to each of the specified actions. The cost or penalty for each specified action reflects the negative effects expected from implementing the specified action. The benefit or reward for each specified action reflects the positive effects, namely, an improvement in performance which is expected from implementing the specified action. As used herein, the term "improvement metric" takes into account both these negative and positive effects and therefore reflects a net improvement in performance expected from implementing the specified action.

In accordance with a further embodiment, the steps of generating the model of the code collaboration data repository, applying simulated data access requests to the model, collecting metrics that represent a plurality of states of the model, determining the change in performance of the model, and updating the look-up table are performed repeatedly, thereby improving the look-up table.

In another embodiment, the steps of collecting metrics that represent the current state of the code collaboration data repository, predicting performance resulting from selection of a plurality of specified actions that affect structure of the data repository, selecting an action from among the one or more specified actions based on said predicting, applying the selected action to the data repository thereby changing the structure of the data repository are performed repeatedly thereby improving performance of accesses to the code collaboration data repository.

These and other aspects of the invention are described in more detail herein.

### Brief Description of the Drawings

The present invention is described with respect to particular exemplary embodiments thereof, and reference is accordingly made to the drawings in which:
Figure 1 illustrates a four-stage feedback loop for managing a code collaboration data repository in accordance with an embodiment of the present invention;
Figure 2 illustrates a system for managing a code collaboration data repository in accordance with an embodiment of the present invention; and
Figure 3 illustrates a matrix look-up table that is generated and improved for managing a code collaboration data repository in accordance with an embodiment of the present invention.

### Detailed Description of a Preferred Embodiment of the Invention

The present invention provides an automated system and method that adjusts a Git repository structure to the incoming traffic shape to achieve a stable system with reliable Git response times. The present invention provides an entirely new and innovative approach to scaling Git performance. The present invention provides a continuous feedback loop that monitors not only the Git repository performance but also the overall structure and environment where the repository is stored and its Git server is running.

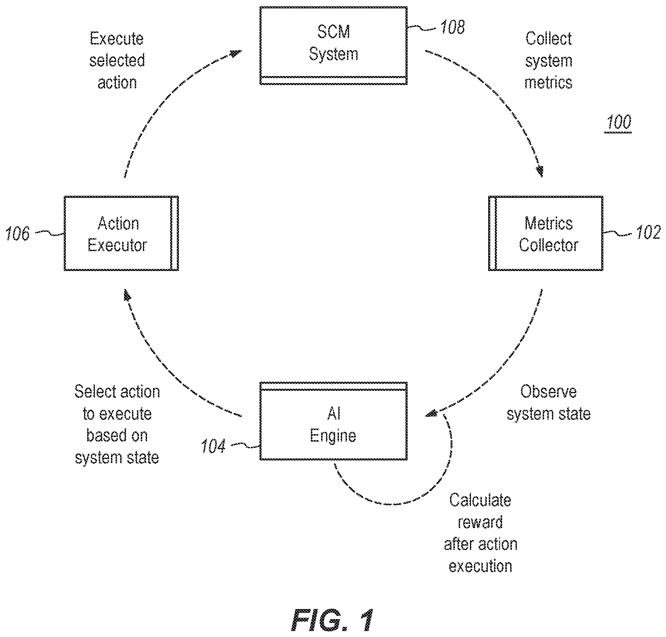

Figure 1 illustrates a four-stage feedback loop 100 for managing a code collaboration data repository in accordance with an embodiment of the present invention. As shown in Figure 1, the feedback loop is composed of four stages: (1) metrics collection 102, (2) system state calculation and performance prediction 104, (3) action assessment 106, and (4) Git repository improvement and reward observation and calculation 108.

During the metrics collection stage 102, the present invention collects all the key metrics of the Git repository and its underlying filesystem. This can include any combination of metrics the following metrics groups:
- Number of Git objects on the repository, categorized by object type: blob, tree, commit and tag.
- Number of packfiles
- Number of directories
- Number of lock files
- Number of single-pack bitmaps
- Presence or absence of a multi-pack bitmap (true/false)
- Presence or absence of a multi-pack index (true/false)
- Number of objects created after the timestamp of the most recent single-pack bitmap
- Number of objects created after the timestamp of the most recent multi-pack bitmap
- Number of packfiles containing only commits belonging to the refs/heads/* or refs/tags/* history created after the timestamp of the most recent single-pack bitmap
- Number of packfiles containing only commits belonging to the refs/heads/* or refs/tags/* history created after the timestamp of the most recent multi-pack bitmap.

The computation of the above metrics is performed using an algorithm that preferably balances the accuracy of the metric value with the cost of scanning the repository in terms of CPU utilization, I/O access and latency. This algorithm preferably has the following characteristics:
- The scanning of the repository happens at file level, avoiding any navigation operation in the commit DAG
- The scanning gives priority to the packfiles and happens using the chronological reverse ordering of the files, so that it can be stopped once a bitmap (single-pack or multi-pack) is found
- The scanning of loose objects happens using the chronological reverse ordering of the files, so that it can be stopped once a bitmap (single-pack or multi-pack) is found
- The categorization of the packfiles as "head-or-tags" (i.e., containing only commits belonging to the refs/heads/* or refs/tags/* history) is performed such that the SHA1s of the packfile index are checked against a reverse lookup table of all heads and tags. The first non-match categorizes the packfile as non "head-or-tags".

In addition to the repository, the present invention also collects the system metrics to assess the ability of the underlying operating system to respond effectively. This can include collecting metrics for: system load, CPU utilization, and free memory available. As shown in Figure 1, the metrics collector stage 102 observes the operation of the source code management (SCM) repository 108, which contains the Git repository, in order to collect these metrics.

In the second stage 104, all the input metrics are given to an engine that is capable of calculating what would be the bottleneck and predicts the expected execution times of the Git upload-pack (e.g., representing over 90% of the workload of modern CI/CD systems) and generates an overall representation of the system state based on the metrics.

The present invention then uses a well-known AI technique called "reinforcement learning" to understand which action, from among a plurality of specified actions, on the Git repository would be most suitable for achieving the best outcome, including its associated execution cost in terms of a temporary slowdown on the system for executing it. In an embodiment, the algorithm implemented is called Q-Learning and is able to assess all the possible options with the expected performance improvement. This can include, for example, the probability of successfully improving performance based on a specific action. Based on this modeling in stage 104, a specified action is selected.

In an embodiment, the specified actions that affect structure of the data repository can be selected from among the following: no action; generating a bitmap of the data repository; repacking some or all of file references of the data repository, removing .keep references; repacking some or all of the loose objects in the repository or regenerating a multi-pack index file and its associated multi-pack bitmap; and removing logically the redundant packfiles by moving them into the Git repository "/preserved" subdirectory. The specified actions can be expanded to include other actions, such as geometric repacking.

In stage three 106, the selected action is applied to the data repository. The present invention can execute the action selected with a minimum footprint on the repository, producing the best-expected outcome for the repository organization in the least amount of time. The result produces an improvement metric which reflects a reward and/or a penalty based on the outcome on the action on the repository. The penalty can be expressed as negative component of the improvement metric and is based on the latency and CPU time spent during the execution of the action.

In the stage 108, the data repository continues operation after the specified action is applied. The cycle then repeats with new metrics collected after the change is implemented.

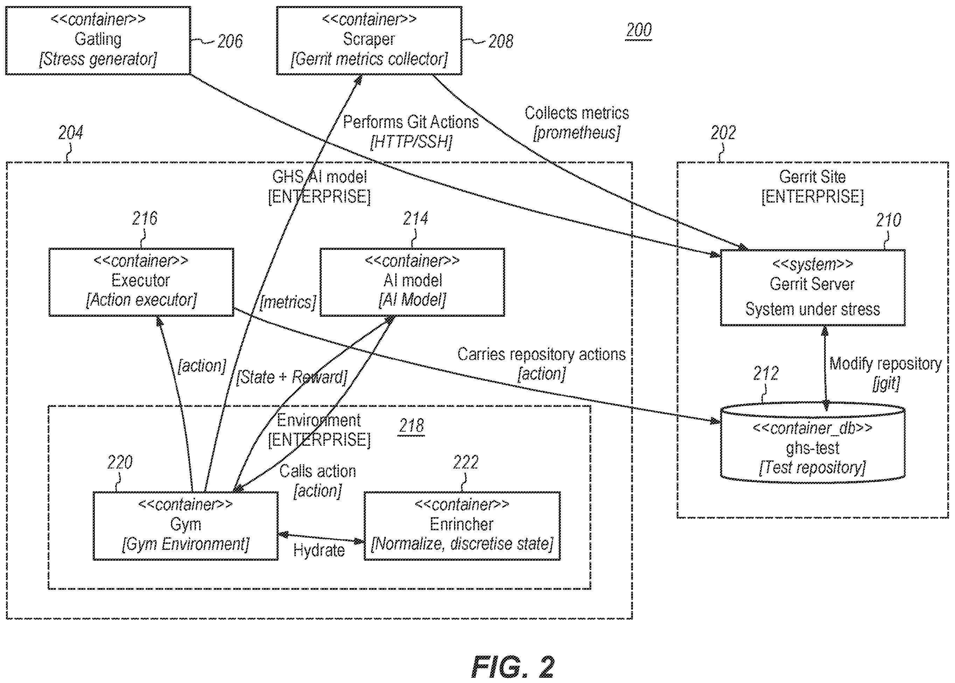

Figure 2 illustrates a system 200 for managing a code collaboration data repository in accordance with an embodiment of the present invention. As shown in Figure 2, the system 200 includes a code collaboration data repository site 202, a model 204, a traffic generator 206 and metrics collector 208. The code collaboration data repository site 202 includes a server 210 and the Git repository 212.

Gerrit server 210 and the Git repository 212 are included for completeness in the diagram and represent the external system that this invention is managing and improving automatically. They may or may not be co-located with the rest of the system, however, the Git repository 212 needs to be directly be accessible at file-system level by the executor 216. This external system 210, 212 can be replaced with another type of code repository and server. For example, the Gerrit server 210 can be replaced with a GitLab server and with a GitHub:Enterprise server for allowing the reinforcement learning feedback loop to evolve different lookup tables based on the way different Git servers operate and manipulate the underlying repository.

As shown in Figure 2, the model 204 includes an artificial intelligence engine (aka AI model) 214 and executor 216. The executor 216 is configured to apply the selected actions to change the structure of the data repository 212. The model 204 also includes a modeled system 218, also referred to as model environment. This modeled system 218 simulates or models operation of the data repository site 202 with time accelerated. The modeled system 218 includes gym environment 220 and enricher 222.

The stress generator 206 is used only during the learning phase of the AI model.

The scraper 208 is co-located and specific to the external system 210, which is Gerrit Server in the Figure 2. Depending on the system type, it may or may not be co-located with the system 210.

The executor 216, AI model 214, the gym environment 220, and enricher 222 are packaged in a single unit, as they are closely connected. The gym 220 stores the current state of the Git server and sends it to the AI model 214, which in turn returns the new state and the associated reward cookie. The reward cookie represents the improvement metric determined for the selected action. As a result, the AI model 214 selects the new state and the most likely action, which is then passed to the executor 216.

As shown in Figure 2, the enricher 222 reads the raw metrics stored in the gym 220 state, normalizes their value to a fixed range 0...1, and stores them back into the gym 220 state. That allows the AI model 214 to be able to use a fairer weight to the metric values independently of their scale and combine them consistently. Normalization is a key element of the system that would otherwise overstate the value of some metrics, like the execution times in milliseconds, which may reach hundreds of thousands, over the lower-value metrics, such as the system load, which counts the number of logical units of processing used by the Git server, typically is within the hundreds units. The loose objects and loose refs metrics are preferably normalized with a custom scheme that is based on a log(base-100) of the value and then rounded to the closest integer value, making the new states upper bound set to 10, which means that max 10 trillions of loose/total[objects|refs] is expected, which seems to be a safe choice as the Linux kernel has only 10M objects which is 1M times less than the maximum number that will be effectively normalized.

As shown in Figure 2, the modeled system 218 includes an associated gym environment 220 that is simulating a "almost real-life scenario" of a Git development team with an associated CI/CD pipeline, but with time accelerated by hundreds of times. There is one "almost real-life scenario" for Gerrit (Gerrit real-life simulation), another one for GitLab (GitLab real-life simulation) and a third one for GitHub:Enterprise (GitHub real-life simulation). The gym environment 220 can, for example, replicate 1 year worth of traffic generated by 100 developers in just 1 hour, allowing the Q-Learning table to evolve quite quickly and learn from the outcome of the past actions. In an embodiment, the gym environment 220 is running an improved version of the Gerrit and JGit (Java-based implementation of Git) that is executing the Git operations, either directly from a Git client or through the JGit API, coming from the traffic generator 206. The traffic generator 206 can be implemented using Gatling or another framework for simulating a programmable workload of Git and HTTP APIs.

The scraper component 208, also referred to as metrics collector 208, retrieves in near-real-time all the metrics of the system 202 under stress and of the underlying Git repository 212, enriches them, and publishes them to the AI agent 204 that calculates the current state of the system.

The AI model 204 then predicts the expected Git's upload-pack performance and uses it to calculate the improvement metric and the next action.

The result of the prediction and the suggested actions are finally communicated to the action executor 216, which applies them to the Git repository 212.

The approach described herein is completely different from any solutions attempted so far. These solutions pointed toward including predefined heuristics for continuously updating a secondary data structure (e.g. Bitmap, multi-pack indexes) for allowing fast lookup of the Git data. When solving the problem of accessing the current data by introducing a new secondary structure (e.g., a secondary index), one has to pay the price of building and maintaining the index in sync. Additionally, the secondary structure may not adapt dynamically to a repository whose shape and growth changes over time. Also, different repositories may require a more tailored strategy because of the specific way it is used by the CI/CD pipeline that clashes with the rigidity of a predefined heuristics.

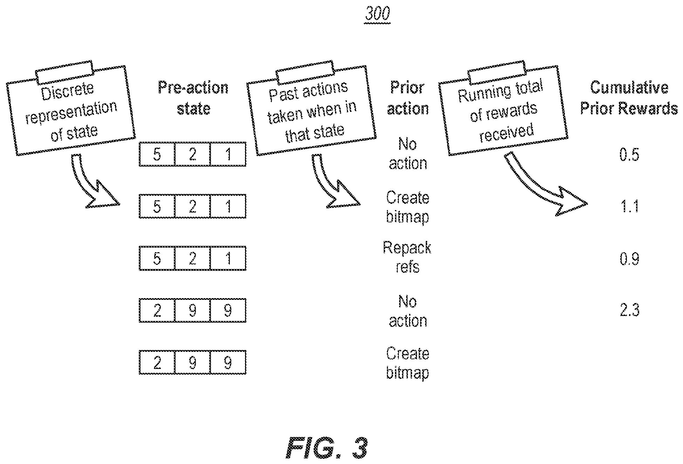

Figure 3 illustrates a matrix look-up table 300 that is generated, stored and improved for managing a code collaboration data repository in accordance with an embodiment of the present invention. The present invention generates and keeps in sync a "matrix of opportunities," which contains the current system status or state in the rows, the possible optimization options in the columns, and a series of improvement metrics based on the probability of performance improvement and the costs associated with the actions in the cells. The matrix is a live entity that gets continuously evaluated and updated based on the outcome of past executions.

Rather than "building" the structure with expensive computational effort, the matrix 300 is "kept up to sync" based on the historical outcome and the evolution of the Q-Learning algorithm on the Git repository. As shown in Figure 3, a sample set of the actions the present invention can execute, which must be a quick action and maximize the opportunities for improving performance, include: removal of Git empty directories, removal of stale .keep packfiles, regenerating the Git bitmap without repacking and geometric repacking, re-packing some or all of the loose objects in the repository, regenerating a multi-pack index file and its associated multi-pack bitmap or removing logically the redundant packfiles by moving them into the Git repository "/preserved" subdirectory. The table 300 can be stored, for example, by the executor 216 within the model 204.

In the past, there were attempts to build some "intelligence" in running Git maintenance, namely, the GC conductor project in the Gerrit eco-system. However, they failed because of the intrinsic complexity of the problem, which would need to take into consideration way too many variables for a traditional rule-based scheduling algorithm to succeed. GitLab and GitHub:Enterprise have also implemented some "intelligence" based on the repository heuristics, which have been thoroughly tested as part of the research work done for the present invention, and have been found unsatisfactory in terms of keeping the repository performance stable, because of the lack of a feedback loop between the performance of the system and the rules applied. Lastly, all the past attempts were more focused on keeping the repository in good shape rather than maximizing its performance and resource utilization.

The present invention relies on learning rather than planning or scheduling. It is also very quick in assessing and executing actions, allowing them to be executed in near real-time and quickly adapt the Git repository structure well before the slowdown becomes a problem for the production environment.

The present invention can be extended and improved in the following areas:

Metrics collection: it is currently taking into consideration only the filesystem-related metrics and the system utilization; however, it could also take into account many other aspects like the runtime execution of some of its Git commands (e.g., Git receive-pack) or part of them (e.g. Git objects counting)

AI algorithm: The basic Q-Learning used is a pure model-free implementation, which could be improved by adding more knowledge about the underlying Git model and the correlation of its variables (e.g., the increase in time-based on the length of delta chains). Also, in terms of actions, they could have associated discrete or continuous variables as parameters. Therefore, the AI algorithm could be evolved into a deep-learning technique which could also propose a variable component of the level of re-packing of objects into packfiles and refs into packed-refs.

Actions: The list of actions can be made configurable and adaptive: the engine could autonomously decide to experiment with new actions and learn from them.

The foregoing detailed description of the present invention is provided for the purposes of illustration and is not intended to be exhaustive or to limit the invention to the embodiments disclosed. Accordingly, the scope of the present invention is defined by the appended claims.

## Claims

1. A method of managing a code collaboration data repository comprising:
collecting metrics that represent a current state of a code collaboration data repository;
predicting performance resulting from a selection of each of a plurality of specified actions that affect the structure of the data repository;
selecting an action from among the one or more specified actions based on said predicting; and
applying the selected action to the data repository, thereby changing the structure of the data repository.

2. The method according to claim 1, wherein said predicting performance comprises:
generating a model of the code collaboration data repository;
applying simulated data access requests to the model of the code collaboration data repository;
collecting metrics that represent a plurality of states of the model; and
determining a change in performance of the model resulting from applying each of the specified actions to each of the states of the model.

3. The method according to claim 2, further comprising updating a look-up table that associates each state of the model with each of the specified actions and wherein the look-up table correlates each combination of state of the model and specified action with an expected change in performance of the model.

4. The method according to claim 3, wherein said steps of generating the model of the code collaboration data repository, applying simulated data access requests to the model, collecting metrics that represent a current state of the model, determining change in performance of the model, and updating the look-up table are performed repeatedly thereby improving the look-up table.

5. The method according to any one of the preceding claims, wherein said selecting comprises:
assigning a cost to each of the specified actions wherein the cost for each specified action reflects negative effects expected from implementing the specified action; and
assigning an improvement metric to each of the specified actions wherein the improvement metric for each specified action reflects the cost and improvement in performance expected from implementing the specified action.

6. The method according to any one of the preceding claims, wherein the plurality of specified actions that affect structure of the data repository include two of more of the following: no action; generating a bitmap of the data repository; repacking some or all of file references of the data repository; removing .keep references; geometric repacking; and re-packing some or all of the loose objects in the repository or regenerating a multi-pack index file and its associated multi-pack bitmap and removing logically the redundant packfiles by moving them into the Git repository "/preserved" subdirectory.

7. The method according to any one of the preceding claims, wherein said steps of collecting metrics that represent the current state of a code collaboration data repository, predicting performance resulting from selection of a plurality of specified actions that affect structure of the data repository, selecting an action from among the one or more specified actions based on said predicting, applying the selected action to the data repository thereby changing the structure of the data repository are performed repeatedly thereby improving performance of accesses to the code collaboration data repository.

8. A system for managing a code collaboration data repository comprising:
a code collaboration data repository under management;
a model of the code collaboration data repository, wherein the system is configured to apply simulated data access requests to the model, collect metrics that represent a plurality of states of the model, and determine a change in performance of the model resulting from applying each of the specified actions to each of the states of the model;
a look-up table stored in memory that associates each state of the model with each of the specified actions, and wherein the look-up table correlates each combination of state of the model and specified action with an expected change in performance of the model; and
an executor module configured to predict performance resulting from selection of each of a plurality of specified actions that affect the structure of the data repository based on the model, select an action from among the one or more specified actions based on said predicting, and apply the selected action to the data repository thereby changing the structure of the data repository.

9. The system according to claim 8, wherein the executor module is configured to select an action from among the one or more specified actions by:
assigning a cost to each of the specified actions wherein the cost for each specified action reflects negative effects expected from implementing the specified action; and
assigning an improvement metric to each of the specified actions, wherein the improvement metric for each specified action reflects improvement in performance expected from implementing the specified action.

10. The system according to claim 8 or 9, wherein the plurality of specified actions that affect structure of the data repository are selected from among the following: no action; generating a bitmap of the data repository; repacking some or all of file references of the data repository; removing .keep references; geometric repacking and re-packing some or all of the loose objects in the repository or regenerating a multi-pack index file and its associated multi-pack bitmap and removing logically the redundant packfiles by moving them into the Git repository "/preserved" subdirectory.

11. The system according to any one of claims 8 to 10, wherein said look-up table is repeatedly updated based on the metrics collected thereby improving the look-up table.

12. The system according to any one of claims 8 to 11, wherein applying the selected action to the data repository thereby changing the structure of the data repository is performed repeatedly thereby improving performance of accesses to the code collaboration data repository.
